# EUROPÄISCHE PATENTSCHRIFT

(11) **EP 2 390 050 B1**
(45) Veröffentlichungstag und Bekanntmachung des Hinweises auf die Patenterteilung: **25.12.2013**
(21) Anmeldenummer: 11167842.1
(22) Anmeldetag: 27.05.2011
(51) Int. Cl.: B23Q 3/157

(54) **Werkzeugmaschine mit Werkzeugwechselvorrichtung**
Machine tool with tool changing device
Machine-outil avec un dispositif de changement d'outil

(30) Priorität: 31.05.2010 DE 102010029530
(43) Veröffentlichungstag der Anmeldung: 30.11.2011
(73) Patentinhaber: Gildemeister Aktiengesellschaft, 33689 Bielefeld (DE)
(72) Erfinder: Gerst, Manuel, 33619 Bielefeld (DE); Bergbaur, Michael, 8323 St. Marein bei Graz (AT)
(74) Vertreter: MERH-IP Matias Erny Reichl Hoffmann

(56) Entgegenhaltungen:
- DE-A1- 1 552 408
- GB-A- 2 024 055
- JP-A- 59 019 648
- US-A- 4 870 744

## Beschreibung

Die vorliegende Erfindung betrifft eine Werkzeugwechselvorrichtung zum Wechseln eines Werkzeugs an einer Spindel einer Werkzeugmaschine mit einer Werkzeugtrommel mit einer Mehrzahl von umfänglich angeordneten Werkzeugaufnahmen zum Aufnehmen von Werkzeugen, einem Achsträger, an dem die Werkzeugtrommel zum Ausrichten der Werkzeugaufnahmen mit der Spindel drehbar gelagert ist, und ein Getriebe, über das die Werkzeugtrommel durch die Spindel der Werkzeugmaschine zum Ausrichten der Werkzeugaufnahmen angetrieben werden kann.

Weiterhin betrifft die vorliegende Erfindung eine Werkzeugmaschine mit einem Spindelstock, eine in dem Spindelstock angeordnete Spindel, und eine vorstehend beschriebene Werkzeugwechselvorrichtung zum Wechseln eines Werkzeugs an der Spindel, wobei eine Werkzeugtrommel der Werkzeugwechselvorrichtung über ein Getriebe durch die Spindel der Werkzeugmaschine zum Ausrichten der Werkzeugaufnahmen der Werkzeugtrommel angetrieben werden kann.

### HINTERGRUND DER ERFINDUNG

Aus dem Stand der Technik sind derartige Werkzeugwechselvorrichtungen zum Wechseln eines Werkzeugs an einer Spindel einer Werkzeugmaschine bekannt, siehe z.B. EP 0 577 850 A1, EP 1652 617 A1, EP 1839 806 A1, US 4,870,744 und JP 59019648. Die beschriebenen Werkzeugwechselvorrichtungen umfassen eine Werkzeugtrommel mit einer Mehrzahl von umfänglich der Werkzeugtrommel angeordneten Werkzeugaufnahmen zum Aufnehmen von Werkzeugen und einen Achsträger, an dem die Werkzeugtrommel der Werkzeugwechselvorrichtung zum Ausrichten der Werkzeugaufnahmen mit der Spindel durch Drehen der Werkzeugtrommel drehbar gelagert ist. Das Ausrichten durch Rotation der Werkzeugtrommel bzw. das Antreiben der Drehung der Werkzeugtrommel zum Ausrichten der Werkzeugaufnahmen mit der Spindel erfolgt durch die Spindel der Werkzeugmaschine, so dass kein zusätzlicher Antrieb vorgesehen werden muss.

Die für die Werkzeugauswahl erforderliche Trommeldrehung der Werkzeugtrommel und die Positionierung der Werkzeugaufnahmen mit der Spindel erfolgt somit durch den Hauptspindelantrieb, wobei ein an der Spindel angebrachtes Spindelzahnrad in einer Werkzeugwechselposition der Werkzeugwechselvorrichtung relativ zu dem Spindelstock der Werkzeugmaschine mit einem Zahnrad der Werkzeugwechselvorrichtung ineinander greift und durch Drehung der Spindel eine Drehung der Werkzeugtrommel bewirkt.

Da das für eine Trommeldrehung notwendige Drehmoment des Hauptspindelantriebs einer Werkzeugmaschine üblicherweise in einem hohen Drehzahlbereich liegt, reicht die Drehzahlreduktion eines derartigen Zahnradgetriebes jedoch nicht aus, um die Werkzeugtrommel damit zur drehenden Ausrichtung der Werkzeugaufnahmen zu betreiben. Aus diesem Grund wird im Stand der Technik zusätzlich ein Reduktionsgetriebe an der Werkzeugtrommel integriert, welches als Kurvenreduktionsgetriebe ausgebildet ist.

Zum Beispiel zeigt die EP 1 652 617 A1 ein Kurvenreduktionsgetriebe mit einer Antriebsscheibe, die eine Kugelantriebsfurche aufweist, und einer Mitnehmerscheibe, die ebenfalls eine Kurvenantriebsfurche aufweist. Zwischen der Antriebsscheibe und der Mitnehmerscheibe ist weiterhin eine Kugelführung mit radialen Kugelführungsöffnungen vorgesehen.

Durch die unterschiedlichen Ausformungen der jeweiligen Kugelmitnehmerfurchen der Antriebsscheibe und der Mitnehmerscheibe wird eine Drehzahlreduktion erzielt, indem eine radiale Bewegung der Kugeln in den radialen Kugelöffnungen der Kugelführung durch Rotation der Antriebsscheibe bewirkt wird, wobei die radiale Bewegung der Kugeln in den radialen Kugelöffnungen dann in eine Drehbewegung der Mitnehmerscheibe bei reduzierter Drehzahl übersetzt wird. Die Antriebsscheibe wird hierbei über ein Zahnradgetriebe durch die Spindel der Werkzeugmaschine angetrieben und die Mitnehmerscheibe ist drehfest mit der Werkzeugtrommel derart verbunden, dass das Antreiben der Antriebsscheibe eine Drehbewegung der Werkzeugtrommel bei reduzierter Drehzahl bewirkt. Ein derartiges Kurvenreduktionsgetriebe ist zum Beispiel aus der JP 60205058 bekannt.

Derartige Werkzeugwechselvorrichtungen mit einem Kurvenreduktionsgetriebe der vorstehend beschriebenen Art weisen jedoch verschiedene Nachteile auf. Zum einen ist der Aufbau eines derartigen Kurvenreduktionsgetriebes umständlich und platzraubend, da die Antriebsscheibe, die mittige Kugelführung und die Mitnehmerscheibe mit großem Umfang bereitgestellt werden müssen. Außerdem entsteht durch die Übersetzung einer Drehbewegung in eine Radialbewegung der Kugeln in eine weitere Drehbewegung eine hohe Reibungswirkung, die durch den Spindelantrieb überwunden werden muss und zudem zu erhöhtem Verschleiß führt. Weiterhin ist es für das Antreiben der Werkzeugtrommel mittels der Spindel der Werkzeugmaschine erforderlich, ein freiliegendes Spindeizahnrad im Arbeitsbereich der Spindel, d.h. im Bereich der Werkzeugaufnahme der Spindel, bereitzustellen, über das die Antriebsscheibe des Kurvenreduktionsgetriebes angetrieben wird.

Eine weitere Werkzeugwechselvorrichtung ist in GB 2 024 055 A beschrieben, unterscheidet sich jedoch in vielen Aspekten von den vorstehend beschriebenen Werkzeugwechselvorrichtungen, insbesondere darin, dass der Werkzeugträger fest am Spindelstock installiert ist, und somit keine schwenkbare Werkzeugtrommel aufweist.

### ZUSAMMENFASSUNG DER ERFINDUNG

Im Hinblick auf die vorstehend beschriebenen Nachteile der aus dem Stand der Technik bekannten Werkzeugwechselvorrichtungen ist es eine Aufgabe der vorliegenden Erfindung, eine Werkzeugwechselvorrichtung zu schaffen, die einen kompakten Aufbau aufweist und mit verminderter Reibung durch die Spindel der Werkzeugmaschine angetrieben werden kann. Es ist eine weitere Aufgabe der vorliegenden Erfindung, eine Werkzeugwechselvorrichtung mit einer drehbaren Werkzeugtrommel, die über die Spindel angetrieben wird, ohne ein kompliziertes und reibungsanfälliges Kurvenreduktionsgetriebe bereitzustellen, wobei dennoch eine effektive Drehzahlreduktion von Werkzeugspindel auf Werkzeugtrommel erzielt werden kann. In anderen Worten ist es eine Aufgabe der vorliegenden Erfindung, eine Werkzeugwechselvorrichtung mit einem effizienten, reibungsarmen und einfach und kompakt aufgebautem Reduktionsgetriebe bereitzustellen. Es ist eine weitere Aufgabe der vorliegenden Erfindung, eine Werkzeugwechselvorrichtung bereitzustellen, bei der es nicht erforderlich Ist, ein freiliegendes Spindelzahnrad im Arbeitsbereich der Spindel zum Antreiben der Werkzeugtrommel der Werkzeugwechselvorrichtung vorzusehen.

Zur Lösung der vorstehend beschriebenen Aufgaben der vorliegenden Erfindung wird eine Werkzeugmaschine nach Anspruch 1 und ferner eine Werkzeugwechselvorrichtung zur Verwendung an einer solchen Werkzeugmaschine zum Wechseln eines Werkzeugs an einer Spindel der Werkzeugmaschine nach Anspruch 14 bereitgestellt. Merkmale bevorzugter Ausführungsformen der vorliegenden Erfindung werden in den abhängigen Ansprüchen beschrieben.

Erfindungsgemäß umfasst eine Werkzeugmaschine einen Spindelstock, eine in dem Spindelstock angeordnete Spindel, ein zweites Kupplungsmittel, das drehbar an dem Spindelstock der Werkzeugmaschine gelagert ist und über eine zweite Getriebestufe von der Spindel der Werkzeugmaschine angetrieben wird, und eine Werkzeugwechselvorrichtung zum Wechsein eines Werkzeugs an der Spindel.

Gemäß der vorliegenden Erfindung umfasst die Werkzeugwechselvorrichtung zum Wechseln eines Werkzeugs an der Spindel der Werkzeugmaschine eine Werkzeugtrommel mit einer Mehrzahl von Werkzeugaufnahmen d.h. in anderen Worten Werkzeugaufnahmemittel zum Aufnehmen von Werkzeugen, einen Achsträger, an dem die Werkzeugtrommel zum Ausrichten der Werkzeugaufnahmen bzw. Werkzeugaufnahmemitteln mit der Spindel drehbar gelagert ist, ein erstes Kupplungsmittel, das drehbar an dem Achsträger gelagert ist, und zumindest eine erste Getriebestufe, über die das erste Kupplungsmittel mit der Werkzeugtrommel verbunden ist.

Hierbei ist das erste Kupplungsmittel der Werkzeugwechselvorrichtung erfindungsgemäß dazu eingerichtet, mit dem zweiten Kupplungsmittel ein- bzw. ausgekuppelt zu werden, und die Werkzeugmaschine ist dazu eingerichtet, die Werkzeugtrommel zum Ausrichten der Werkzeugaufnahmemittel bei eingekuppeltem Zustand des ersten und zweiten Kupplungsmittels durch die Spindel über die zweite Getriebestufe, das zweite und erste Kupplungsmittel und die zumindest eine erste Getriebestufe anzutreiben. Die Werkzeugtrommel ist dazu eingerichtet, bei eingekuppeltem Zustand des ersten und zweiten Kupplungsmittels durch die Spindel der Werkzeugmaschine über die zumindest eine zweite Getriebestufe, das zweite und erste Kupplungsmittel und die zumindest eine erste Getriebestufe zum Ausrichten der Werkzeugaufnahmemitteln angetrieben zu werden.

Erfindungsgemäß wird somit ein an dem Achsträger drehbar gelagertes erstes Kupplungsmittel bereitgestellt, das über eine erste Getriebestufe mit der Werkzeugtrommel verbunden ist. Somit kann die Werkzeugtrommel über das erste Kupplungsmittel und die erste Getriebestufe angetrieben werden. Die erste Getriebestufe ermöglicht hierbei eine effiziente und reibungsarme Drehzahlreduktion bei Antrieb der Werkzeugtrommel über das erste Kupplungsmittel.

Weiterhin ist das erste Kupplungsmittel erfindungsgemäß dazu eingerichtet, mit einem zweiten Kupplungsmittel ein- bzw. ausgekuppelt zu werden, wobei das zweite Kupplungsmittel drehbar an dem Spindelstock der Werkzeugmaschine gelagert ist. Somit wird ermöglicht, dass der Antrieb der Werkzeugtrommel über das zweite Kupplungsmittel am Spindelstock erfolgt und nicht über ein im Arbeitsbereich der Spindel gelegenes Spindelzahnrad erfolgen muss.

Erfindungsgemäß ist es vorgesehen, dass die Werkzeugtrommel dazu eingerichtet ist, bei eingekuppeltem Zustand des ersten und zweiten Kupplungsmittels durch die Spindel der Werkzeugmaschine angetrieben zu werden. Der Antrieb erfolgt erfindungsgemäß über zumindest eine zweite Getriebestufe, über die die Spindel das zweite Kupplungsmittel antreiben kann, wobei das zweite Kupplungsmittel das erste Kupplungsmittel antreibt und die zumindest eine erste Getriebestufe der Werkzeugwechselvorrichtung durch das erste Kupplungsmittel angetrieben wird und somit die Werkzeugtrommel antreibt. Somit kann eine weitere Drehzahlreduktion durch die Übersetzung der ersten und der zweiten Getriebestufe erzielt werden.

Durch die Verbindung zwischen der zweiten Getriebestufe, dem zweiten und ers-ten Kupplungsmittel und der zumindest einen ersten Getriebestufe kann somit ein kompaktes, effizientes und reibungsarmes Reduktionsgetriebe bereitgestellt werden, über das die Werkzeugtrommel mittels der Spindel bei Reduktion der Drehzahl angetrieben werde kann. Das zweite Kupplungsmittel ist hierbei am Spindelstock der Werkzeugmaschine drehbar gelagert, so dass die Kupplung zwischen dem ersten und dem zweiten Kupplungsmittel nicht im Arbeitsbereich der Werkzeugspindel vorgesehen werden muss. Der Arbeitsbereich der Werkzeugspindel kann somit vorteilhaft frei gestaltet werden, insbesondere ohne das Erfordernis eines freiliegenden Spindelzahnrads.

Erfindungsgemäß ist der Achsträger dazu eingerichtet, mittels eines Gelenks schwenkbar gelagert an einer Halterung der Werkzeugmaschine befestigt zu werden. Dies hat den Vorteil, dass die an dem Achsträger drehbar gelagerte Werkzeugtrommel mit dem Achsträger mittels des Gelenks von der Spindel der Werkzeugmaschine weg bzw. zu der Spindel der Werkzeugmaschine hin geschwenkt werden kann, um eine Werk-zeugaufnahme der Werkzeugtrommel zum Ein- bzw. Auswechseln eines Werkzeugs mit der Drehachse der Spindel auszurichten.

Die Werkzeugaufnahmemittel sind vorzugsweise entlang des Umfangs der Werkzeugtrommel um die Drehachse der Werkzeugtrommel herum angeordnet. Die Werkzeugaufnahme mittel können Integral mit der Werkzeugtrommel ausgebildet sein oder an der Werkzeugtrommel befestigt sein. Die Werkzeugaufnahmemittel umfassen vorzugsweise Werkzeughaltemittel zum Halten von Werkzeugen oder Werkzeuggreifmittel zum Greifen von Werkzeugen. Zum Beispiel können die Werkzeugaufnahmemittel als Werkzeugklammern ausgebildet sein.

Vorzugsweise ist das erste Kupplungsmittel an dem Achsträger auf einer von einer Werkzeugwechselposition an der Spindel relativ zu der Drehachse der Werkzeugtrommel entgegengesetzten Seite angeordnet. Dies hat den Vorteil, dass das erste Kupplungsmittel in einem von dem Arbeitsbereich der Spindel der Werkzeugmaschine abgewandten Bereich der Werkzeugwechselvorrichtung angeordnet ist, so dass der Arbeitsbereich der Spindel frei bleiben kann und der Antrieb der Werkzeugtrommel auf der entgegengesetzten Seite der Werkzeugwechselvorrichtung erfolgen kann.

Nach einem bevorzugten Ausführungsbeispiel der vorliegenden Erfindung ist das erste Kupplungsmittel über eine erste Getriebestufe mit der Werkzeugtrommel verbunden, wobei die erste Getriebestufe vorzugsweise ein koaxial mit der Werkzeugtrommel angeordnetes erstes Zahnrad, das drehfest mit der Werkzeugtrommel verbunden ist, und ein drehfest mit dem ersten Kupplungsmittel verbundenes zweites Zahnrad umfasst. Vorzugsweise ist die erste Getriebestufe hierbei als Kegelradgetriebe ausgebildet.

Nach diesem bevorzugten Ausführungsbeispiel der vorliegenden Erfindung kann ein besonders kompaktes Getriebe zum Antreiben der Werkzeugtrommel der Werkzeugwechselvorrichtung bereitgestellt werden, da nur eine einzige Getriebestufe mit zwei Zahnrädern in der Werkzeugwechselvorrichtung vorgesehen wird. Die erforderliche Drehzahlreduktion kann hierbei durch die Gesamtübersetzung der Übersetzungen der einen ersten Getriebestufe und der zumindest einen zweiten Getriebestufe erfolgen. Ein Neigungswinkel zwischen der Drehachse der Werkzeugtrommel und der Drehachse des ersten Kupplungsmittels wird vorzugsweise durch ein Kegelradgetriebe ausgeglichen, welches die erste Getriebestufe ausbildet. Dies bedeutet, dass das erste Zahnrad und das zweite Zahnrad vorzugsweise Kegelräder sind, deren Anstellwinkel den Neigungswinkel zwischen der Drehachse der Werkzeugtrommel und des ersten Kupplungsmittels ausgleicht.

Nach einem weiteren bevorzugten Ausführungsbeispiel der vorliegenden Erfindung ist das erste Kupplungsmittel über eine erste Getriebestufe und eine dritte Getriebestufe mit der Werkzeugtrommel verbunden, wobei die erste Getriebestufe vorzugsweise ein koaxial mit der Werkzeugtrommel angeordnetes erstes Zahnrad, das drehfest mit der Werkzeugtrommel verbunden ist, und ein drittes Zahnrad umfasst, die dritte Getriebestufe vorzugsweise ein drehfest mit dem ersten Kupplungsmittel verbundenes zweites Zahnrad und ein viertes Zahnrad umfasst, und das dritte Zahnrad der ersten Getriebestufe und das vierte Zahnrad der dritten Getriebestufe vorzugsweise drehfest miteinander verbunden sind.

Nach diesem Weiteren bevorzugten Ausführungsbeispiel werden eine erste und eine dritte Getriebestufe in die Werkzeugwechselvorrichtung integriert, wodurch vorteilhaft eine noch höhere Drehzahlreduktion erzielt werden kann, da sich die Gesamtübersetzung aus den Übersetzungen der ersten, zweiten und dritten Getriebestufe ergibt. Somit ist dieses bevorzugte Ausführungsbeispiel insbesondere vorteilhaft für Werkzeugwechselvorrichtungen mit einer höheren Zahl von Werkzeugaufnahmen an der Werkzeugtrommel, d.h. z.B. bei reduziertem Winkel zwischen benachbarten Werkzeugaufnahmemitteln der Werkzeugtrommel. Hierbei kann die erste Getriebestufe als Stirn- oder Kegelradgetriebestufe ausgebildet sein und auch die dritte Getriebestufe kann als Stirn- oder

Kegelradgetriebestufe ausgebildet sein.

Nach einer besonders bevorzugten Ausführungsform ist die erste Getriebestufe als Stirnradgetriebe und die dritte Getriebestufe als Kegelradgetriebestufe ausgebildet. Somit wird es vorteilhaft ermöglicht, eine Neigung zwischen der Drehachse der Werkzeugtrommel und der Drehachse des ersten Kupplungsmittel bereits durch das Kegelradgetriebe der dritten Getriebestufe auszugleichen, so dass die Verbindung des dritten Zahnrads der ersten Getriebestufe und des vierten Zahnrads der dritten Getriebestufe mit einer zu der Drehachse der Werkzeugtrommel parallelen Drehachse bereitgestellt werden kann, wodurch eine besonders kompakte Bereitstellung der ersten und der dritten Getriebestufe In der Werkzeugwechselvorrichtung ermöglicht wird.

Vorzugsweise sind das dritte Zahnrad der ersten Getriebestufe und das vierte Zahnrad der dritten Getriebestufe über ein Verbindungsmittel drehfest miteinander verbunden, wobei das Verbindungsmittel vorzugsweise drehbar an dem Achsträger gelagert ist. Dies hat den Vorteil, dass der Aufbau der Getriebestufen noch kompakter bereitgestellt werden kann, da sowohl die Verbindung zwischen dem ersten Kupplungsmittel und dem zweiten Zahnrad sowie die Verbindung zwischen dem dritten Zahnrad und dem vierten Zahnrad an dem Achsträger der Werkzeugwechselvorrichtung drehbar gelagert sind.

Vorzugsweise bilden das erste und das zweite Kupplungsmittel eine Oldham-Kupplung aus. Somit kann eine besonders einfache Ausbildung der Kupplung zwischen dem ersten und dem zweiten Kupplungsmittel bereitgestellt werden, wobei weiterhin vorteilhaft aufgrund der Funktionsweise der Oldham-Kupplung eine exakte Ausrichtung der Drehachse des ersten Kupplungsmittel und der Drehachse des zweiten Kupplungsmittels nicht erforderlich ist, wenn eines der beiden Kupplungsmittel zwei Scheiben der Oldham-Kupplung umfasst und das andere Kupplungsmittel die dritte Scheibe der Oldham-Kupplung umfasst. Eine noch einfachere Ausführung einer Kupplung zwischen dem ersten und dem zweiten Kupplungsmittel kann durch eine einfache Nut-Feder-Verbindung bereitgestellt werden, bei der eines der Kupplungsmittel eine Nut und das andere der Kupplungsmittel eine Feder aufweist. Im Allgemeinen kann die Kupplung zwischen dem ersten und dem zweiten Kupplungsmittel durch eine kraftschlüssige Verbindung (Reibungs- und/oder Magnetverbindung) und/oder eine formschlüssige Verbindung, wie zum Beispiel bei der vorstehend beschriebenen Oldham-Kupplung bzw. Feder-Nut-Verbindung, erfolgen.

Vorzugsweise ist das erste Kupplungsmittel dazu eingerichtet, mit dem zweiten Kupplungsmittel durch Auf- und Abwärtsverfahren des Spindelstocks relativ zu dem Achsträger ein- bzw. ausgekuppelt zu werden. Dies hat den Vorteil, dass das Ein- bzw. Auskuppeln des ersten mit dem zweiten Kupplungsmittel auf besonders einfach Art und Weise durch Auf und Abwärtsverfahren des Spindelstocks der Werkzeugmaschine relativ zu dem Achsträger erfolgen kann.

Vorzugsweise bilden die zumindest eine erste Getriebestufe und die zweite Getriebestufe ein Reduktionsgetriebe aus. Dies hat den Vorteil, dass eine Drehzahlreduktion durch Gesamtübersetzung der ersten und der zweiten Getriebestufe erreicht werden kann. Dies ermöglicht es, das für die Trommeldrehung erforderliche Drehmoment über die Spindel der Werkzeugmaschine bereitzustellen. Zudem ermöglicht dies eine präzisere Steuerung der Drehung der Werkzeugtrommel zum exakten Ausrichten bzw. Positionieren der Werkzeugaufnahmen der Werkzeugtrommel, da eine Umdrehung der Werkzeugtrommel einer Mehrzahl von Drehungen der Spindel der Werkzeugmaschine entspricht. Das Übersetzungsverhältnis wird hierbei vorzugsweise durch die Gesamtübersetzung der zumindest einen ersten Getriebestufe und der zumindest einen zweiten Getriebestufe bzw. durch die Gesamtübersetzung der ersten, zweiten und dritten Getriebestufe vorgegeben.

Vorzugsweise sind die Mehrzahl von Werkzeugaufnahmen umfänglich der Werkzeugtrommel gleichmäßig angeordnet, d.h. in gleichmäßiger Winkel-Beabstandung bei gleichen Winkeln zwischen Jeweils benachbarten Werkzeugaufnahmen, und die Übersetzungen der zumindest einen ersten Getriebestufe und der zweiten Getriebestufe sind vorzugsweise derart vorgesehen, dass die Gesamtübersetzung derart eingestellt ist, dass die Werkzeugtrommel bei einer Spindelumdrehung oder bei einem ganzzahligen Vielfachen einer Spindelumdrehung um eine Werkzeugaufnahmeposition weitergedreht wird, insbesondere um einen Winkel entsprechend 360° geteilt durch die Anzahl der Werkzeugaufnahmemittel.

Dies ermöglicht, eine besonders einfache Steuerung der Trommeldrehung durch den Spindelantrieb, indem eine Spindelumdrehung bzw. ein ganzzahliges Vielfaches einer Spindelumdrehung exakt entsprechend der Gesamtübersetzung eine Drehung der Werkzeugtrommel, um einen Winkel entsprechend der Winkel-Beabstandung der Werkzeugaufnahmen bewirkt. Dies ermöglicht es insbesondere vorteilhaft, die Werkzeugtrommel mit einer größeren bzw. kleineren Werkzeugtrommel mit unterschiedlicher Werkzeugzahl auszuwechseln, ohne die Spindelsteuerung anzupassen, da die Gesamtübersetzung jeweils derart durch die an der Werkzeugtrommel integrierten Getriebestufen bereitgestellt werden kann, dass eine Spindelumdrehung bzw. ein ganzzahliges Vielfaches einer Spindelumdrehung die Werkzeugtrommel um eine Werkzeugaufnahmeposi-tion weiter dreht. Hierzu ist es jeweils lediglich erforderlich, die Übersetzung der ersten Getriebestufe bzw. z.B. der ersten und dritten Getriebestufe an die Zahl der gleichmäßig angeordneten Werkzeugaufnahmen anzupassen, ohne die zweite Getriebestufe anpassen zu müssen.

Die zweite Getriebestufe kann zum Beispiel ein Übersetzungsverhältnis von 1:1 oder 1:2 aufweisen, so dass eine Spindelumdrehung zu einer (Übersetzung 1:1) bzw. einer halben (Übersetzung 1:2) Umdrehung des zweiten Kupplungsmittels führt. Bei der bevorzugten Ausführung der Kupplung als Nut-Feder-Verbindung oder Oldham-Kupplung entspricht somit eine Spindelumdrehung vorteilhaft genau einer ganzen bzw. halben Umdrehung des zweiten Kupplungsmittels, so dass Jeweils eine Ein- bzw. Auskuppelpositlonierung des zweiten Kupplungsmittels bei ganzzahligen Spindelumdrehungen erreicht werden kann.

Vorzugsweise ist die Drehachse des ersten Kupplungsmittels im eingekuppelten Zustand mit dem zweiten Kupplungsmittel im Wesentlichen senkrecht zu der Spindelachse der Spindel angeordnet. Dies ermöglicht einen besonders einfachen Aufbau, da das erste Kupplungsmittel sowie das zweite Kupplungsmittel mit Drehachsen, die im Wesentlichen senkrecht zu der Spindelachse der Spindel angeordnet sind, bereitgestellt werden können. Die zweite Getriebestufe kann somit kompakt und mit einfachem Aufbau durch ein Kegelradgetriebe mit im Wesentlichen senkrecht zueinander liegenden Drehachsen bereitgestellt werden. Zudem ermöglicht eine senkrecht stehende Drehachse des ersten und zweiten Kupplungsmittels im eingekuppelten Zustand bei Ausführung der Kupplung als Nut-Feder-Verbindung oder Oldham-Kupplung ein einfaches Ein- bzw. Auskuppeln der Kupplungsmittel durch Relativbewegung des ersten und zweiten Kupplungsmittels, vorzugsweise in Verfahrrichtung des Spindelstocks der Werkzeugmaschine.

Vorzugsweise ist die Drehachse der Werkzeugtrommel im eingekuppelten Zustand des ersten und zweiten Kupplungsmittels zu der Drehachse des ersten Kupplungsmittels geneigt und der Neigungswinkel zwischen der Drehachse der Werkzeugtrommel und der Drehachse des ersten Kupplungsmittels wird durch eine Kegelradgetriebestufe der zumindest einen ersten Getriebestufe ausgeglichen.

Vorzugsweise ist der Spindelstock relativ zu der Werkzeugwechselvorrichtung aufund abwärts verfahrbar. Dies ermöglicht es vorteilhaft, eine Werkzeugwechselpositionierung der Werkzeugwechselvorrichtung durch Auf- bzw. Abwärtsverfahren des Spindelstocks anzusteuern.

Vorzugsweise wird die Werkzeugwechselvorrichtung mittels zumindest einer Zugfeder an eine Steuerkurve des Spindelstocks gedrückt, wobei bei Verfahren des Spindelstocks ein am Achsträger angeordnetes Führungsmittel entlang der Steuerkurve geführt wird, derart dass ein Aufwärtsverfahren des Spindelstocks eine Schwenkbewegung des Achsträgers zu der Spindel hin bewirkt und ein Abwärtsverfahren des Spindelstocks eine Schwenkbewegung des Achsträgers von der Spindel weg bewirkt. Somit kann eine Schwenkbewegung bei Werkzeugwechselvorrichtungen hin zu der Spindel bzw. weg von der Spindel durch einfaches Auf- bzw. Abwärtsverfahren des Spindelstocks der Werkzeugmaschine bewirkt werden. Das Führungsmittel kann hierbei z.B. eine oder mehrere am Achsträger angeordnete Rollen umfassen. Das Führungsmittel kann auch ein oder mehrere auf dem Achsträger ausgebildete oder angebrachte Abschnitte umfassen, die in Kontakt mit der Steuerkurve des Spindelstocks geführt werden.

Vorzugsweise ist das erste Kupplungsmittel dazu eingerichtet, mit dem zweiten Kupplungsmittel durch Auf- und Abwärtsverfahren des Spindelstocks relativ zu dem Achsträger ein- bzw. ausgekuppelt zu werden. Dies ermöglicht besonders einfaches Ein- bzw. Auskuppeln des ersten und zweiten Kupplungsmittels durch Auf- und Abwärtsverfahren des Spindelstocks relativ zu dem Achsträger bzw. relativ zu der Werkzeugwechselvorrichtung.

Vorzugsweise befinden sich das erste und das zweite Kupplungsmittel in der höchsten Position des Spindelstocks in dem eingekuppelten zustand. Dies hat den Vorteil, dass der eingekuppelte Zustand besonders einfach angesteuert werden kann, da er in der höchsten anfahrbaren Position des Spindelstocks erreicht wird.

Vorzugsweise entkuppelt ein Abwärtsverfahren des Spindelstocks aus der höchsten Position das erste und das zweite Kupplungsmittel. Somit kann die Kupplung zwischen dem ersten und dem zweiten Kupplungsmittel auf besonders einfache Art und Weise durch Abwärtsverfahren des Spindelstocks aus der höchsten Position erreicht werden.

Erfindungsgemäß umfasst die Werkzeugmaschine eine an einem Maschinenständer der Werkzeugmaschine befestigten Halterung, an der der Achsträger der Werkzeugwechselvorrichtung mittels eines Gelenks schwenkbar gelagert ist. Somit kann eine besonders einfache Ausführung einer Halterung bereitgestellt werden, an der der Achsträger der Werkzeugwechselvorrichtung schwenkbar gelagert werden kann.

Zusammenfassend stellt die vorliegende Erfindung eine Werkzeugwechselvorrichtung bereit, die einen kompakten Aufbau aufweist und mit verminderter Reibung durch die Spindel der Werkzeugmaschine angetrieben werden kann. Die vorliegende Erfindung eine Werkzeugwechselvorrichtung stellt eine Werkzeugwechselvorrichtung mit einer drehbaren Werkzeugtrommel bereit, die über die Spindel angetrieben wird, ohne ein kompliziertes und reibungsanfälliges Kurvenreduktionsgetriebe zu erfordern, wobei dennoch eine effektive Drehzahlreduktion von Werkzeugspindel auf Werkzeugtrommel erzielt werden kann. Die Werkzeugwechselvorrichtung gemäß der vorliegenden Erfindung kann mit einem effizienten, reibungsarmen und einfach und kompakt aufgebautem Reduktionsgetriebe bereitgestellt werden. Außerdem ist es gemäß der vorliegenden Erfindung nicht erforderlich, ein freiliegendes Spindelzahnrad im Arbeitsbereich der Spindel zum Antreiben der Werkzeugtrommel der Werkzeugwechselvorrichtung vorzusehen.

### KURZBESCHREIBUNG DER FIGUREN

Fig. 1 zeigt eine schematische Teilschnittansicht einer Werkzeugwechselvorrichtung nach einem ersten Ausführungsbeispiel der vorliegenden Erfindung.
Fig. 2 zeigt schematisch den Aufbau einer Steuerung der Schwenkbewegung der Werkzeugwechselvorrichtung gemäß dem ersten Ausführungsbeispiel der vorliegenden Erfindung durch Auf- und Abwärtsverfahren des Spindelstocks einer Werkzeugmaschine.
Figs. 3A, 3B und 3C zeigen schematische Details der Kupplung eines ersten und zweiten Kupplungsmittels gemäß dem ersten Ausführungsbeispiel der vorliegenden Erfindung.
Figs. 4A, 4B, 4C und 4D zeigen schematisch einen Einwechselvorgang eines Werkzeugs an der Werkzeugmaschine mittels einer Werkzeugwechselvorrichtung nach dem ersten Ausführungsbeispiel der vorliegenden Erfindung.
Fig. 5 zeigt schematisch eine Teilschnittansicht einer Werkzeugwechselvorrichtung nach einem zweiten Ausführungsbeispiel der vorliegenden Erfindung.
Fig. 6 zeigt schematisch eine Perspektivansicht der Werkzeugwechselvorrichtung nach dem zweiten Ausführungsbeispiel der vorliegenden Erfindung.
Fig. 7 zeigt eine Werkzeugklammer einer Werkzeugwechselvorrichtung nach einem weiteren Ausführungsbeispiel der vorliegenden Erfindung mit Werkzeug.

### AUSFÜHRLICHE BESCHREIBUNG BEVORZUGTER AUSFÜHRUNGSBEISPIELE DER VORLIEGENDEN ERFINDUNG

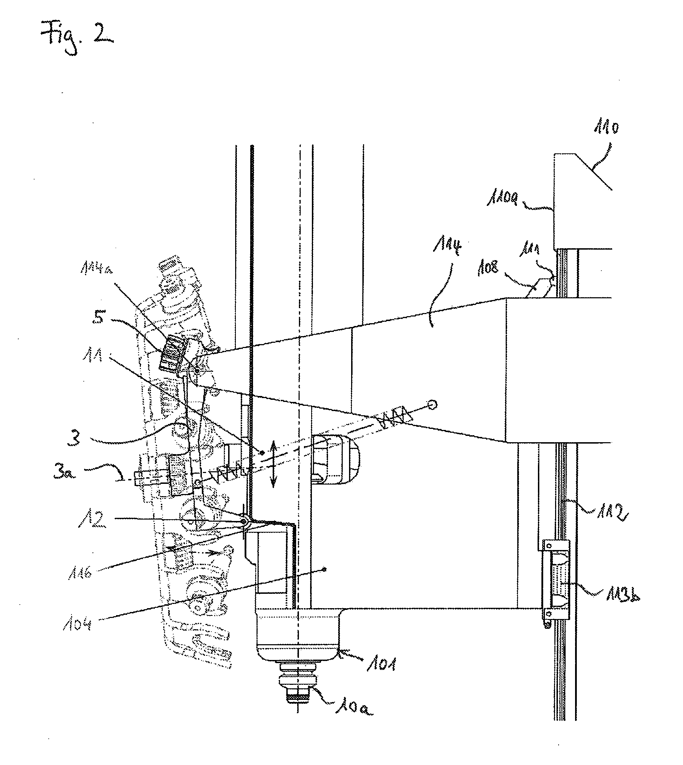

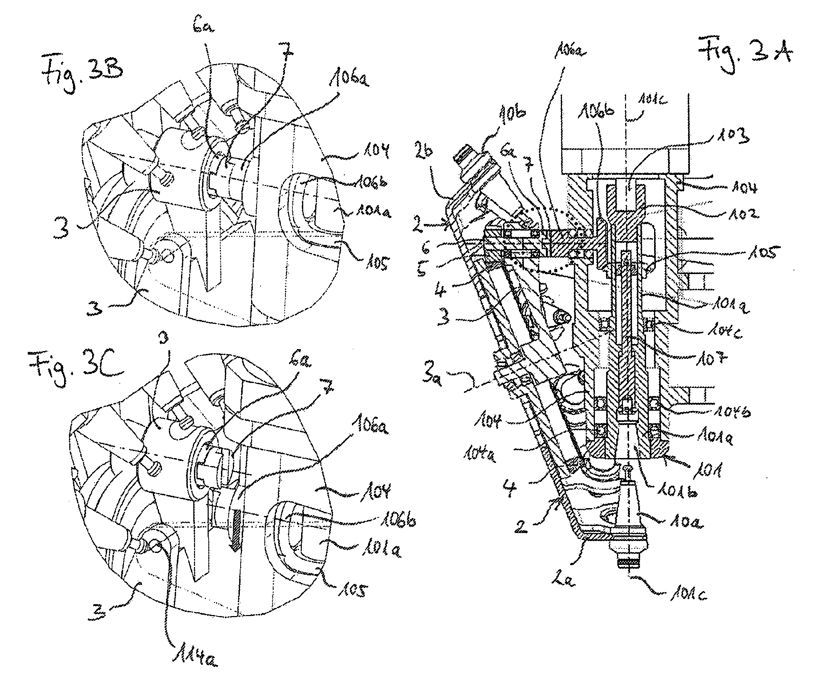

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet. Zu den Punkten am Ende der Bezugszeichenlinien in den Figs. 2, 5 und 6 sei darauf hingewiesen, dass diese das Ende der Bezugszeichenlinien kennzeichnen und nicht als technische Details des dargestellten Gegenstands zu verstehen sind. Die entsprechenden Bezugszeichenlinien mit den entsprechenden Endpunken in den Figs. 2, 5 und 6 sind zeichentechnisch zumindest teilweise geradlinig ausgeführt. Diese zumindest teilweise geradlinigen Bezugszeichenlinien stellen keine technischen Details des dargestellten Gegenstands dar. Die Punkte in Fig. 3A stellen ebenfalls keine technischen Details des dargestellten Gegenstands dar, sondern illustrieren einen Ausschnitt der Zeichnung, der in den Figs. 3B und 3C vergrößert und perspektivisch dargestellt ist.

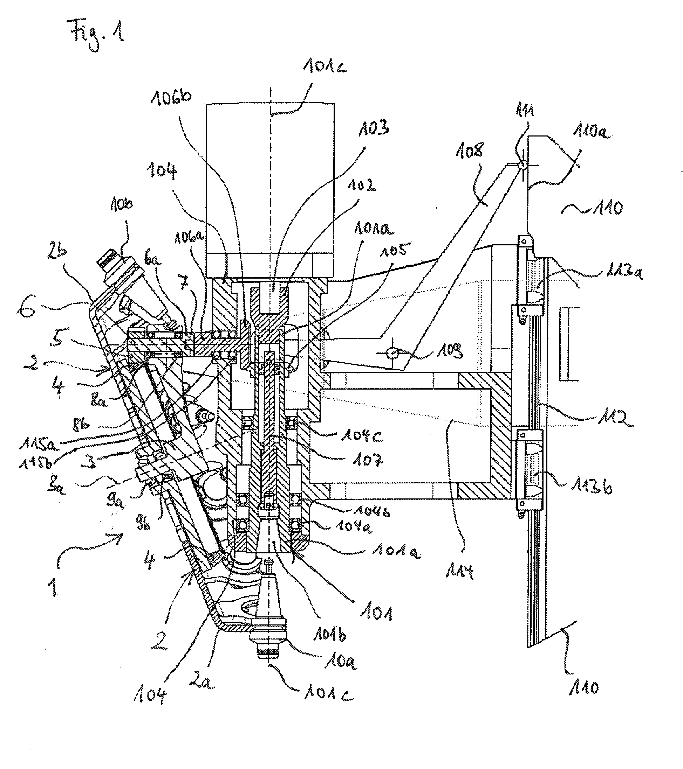

Fig. 1 zeigt beispielhaft eine schematische Teilschnittansicht einer Werkzeugwechselvorrichtung 1 nach einem ersten Ausführungsbeispiel der vorliegenden Erfindung. Die Werkzeuge 10a, 10b, 10c können radial auf einer über dem Achsträger 3 drehbar gelagerten Werkzeugtrommel 2 mittels Werkzeughalteklammern 2a, 2b, 2c (Werkzeugaufnahmen bzw. Werkzeugaufnahmemittel) gelagert bzw. befestigt werden. Der Achsträger 3 ist über eine am Maschinenständer 110 der Werkzeugmaschine befestigten Halterung 114 durch ein Gelenk 114a schwenkbar gelagert und wird über eine Zugfeder 11 mit einer Steuerkurve 116 (siehe z.B. Fig. 2) versehenen Spindelstock 104 gedrückt. Der Spindelstock 104 ist relativ zu dem Maschinenständer 110 auf- und abwärts verfahrbar, wobei der Spindelstock 104 zwei seitlich angebrachte Schlitten 113a und 113b aufweist, die an einer Führungsschiene 112 des Maschinenständers 110 bei dem Auf- und Abwärtsverfahren des Spindelstocks 104 geführt werden.

Wie in Fig. 2 schematisch dargestellt ist, weist der Achsträger 3 in diesem Ausführungsbeispiel eine Rolle 12 auf, die bei Auf- und Abwärtsverfahren des Spindelstocks 104 entlang der Steuerkurve 116 geführt wird, wobei die Rolle 12 mittels der Zugfeder 11 an der Steuerkurve 116 des Spindelstocks 104 gehalten wird. Eine vertikale Bewegung des Spindelstocks 104 (d.h. Auf- bzw. Abwärtsverfahren des Spindelstocks 104 mit der Steuerkurve 116 relativ zu der Werkzeugwechselvorrichtung 1) bewirkt dadurch eine Schwenkbewegung des Achsträgers 3 mit der Werkzeugtrommel 2, so dass eine Werkzeugklammer 2a bzw. ein darin aufgenommenes Werkzeug 10a in die für einen Werkzeugwechselvorgang notwendige Position gebracht werden kann, bei der das Werkzeug mit der Drehachse 101c der Spindel 101 der Werkzeugmaschine ausgerichtet ist (wie es z.B. in Fig. 1 gezeigt ist).

Eine Aufwärtsbewegung des Spindelstocks 104 bewirkt mittels der Steuerkurve 116 ein Schwenken der Werkzeugtrommel 2 hin zu der Arbeitsspindel 101 und ein Abwärtsverfahren des Spindelstocks 104 bewirkt eine Schwenkbewegung der Werkzeugtrommel 2 weg von der Spindel 101. Die Spindel 101 der Werkzeugmaschine umfasst einen Spindelkopf 101a mit einer Werkzeugaufnahme 101b zur Aufnahme eines Werkzeugs. Der Spindelkopf 101a ist über ein Verbindungselement 102 drehfest mit einem Endabschnitt 103 (Wellenstutzen 103) der Spindelantriebswelle verbunden, über den der Rotationsantrieb der Spindel 101 erfolgt. In diesem Ausführungsbeispiel gemäß Fig. 1 ist die Werkzeugaufnahme 101b beispielhaft als Steilkegel-Werkzeugaufnahme ausgebildet. Die vorliegende Erfindung ist jedoch nicht auf Steilkegel-Werkzeugaufnahmen beschränkt. Es ist z.B. ebenfalls möglich, die Werkzeugaufnahme 101b z.B. als Hohlschaftkegel-Werkzeugaufnahme oder andere Arten von Spindel-Werkzeugaufnahmen auszubilden.

Fig. 1 zeigt die Werkzeugwechselvorrichtung 1 nach dem ersten Ausführungsbeispiel der vorliegenden Erfindung in der höchsten Position des Spindelstocks 104, bei der das Werkzeug 10a an der tiefsten Position der Werkzeugtrommel 2 mit der Drehachse 101c der Spindel 101 der Werkzeugmaschine ausgerichtet ist, wobei dieses Werkzeug 10a durch Abwärtsverfahren des Spindelstocks 104 in der Werkzeugaufnahme 101b der Spindel 101 aufgenommen werden kann.

Zum Ausrichten der Werkzeugaufnahmen 2a, 2b, 2c mit der Drehachse 101c der Spindel 101 ist die Werkzeugtrommel 2 drehbar an dem Achsträger 3 mittels der Lager 9a und 9b gelagert. Weiterhin ist ein Kupplungselement 6 eines ersten Kupplungsmittels mittels der Lager 8a und 8b drehbar an dem Achsträger 3 gelagert. Das Verbindungselement 6 ist drehfest mit einem Stirnrad 5 (zweites Zahnrad) verbunden. Das Stirnrad 5 bildet mit einem Kegelrad 4 (erstes Zahnrad) eine erste Getriebestufe, die in der Werkzeugwechselvorrichtung 1 integriert ist. Das Kegelrad 4 ist drehfest an der Werkzeugtrommel 2 befestigt bzw. drehfest mit dieser integriert. In Fig. 1 ist beispielhaft ein mit dem Verbindungsmittel 6 drehfest verbundenes Stirnrad 5 vorgesehen, jedoch kann weiterhin für die Verbindung mit dem Kegelrad 4 ein Kegelrad vorgesehen werden. Es ist ausreichend, wenn die Zahnräder 4 und 5 einen Anstellwinkel aufweisen, der den Neigungswinkel zwischen der Drehachse des Verbindungselements 6 und der Drehachse 3a der Werkzeugtrommel 2 ausgleicht.

In der in Fig. 1 dargestellten höchsten Position des Spindelstocks 104 ist das erste Kupplungsmittel umfassend das Kupplungselement 6 der Werkzeugwechselvorrichtung 1 mit einem Kupplungselement 106a (zweiten Kupplungsmittel) verbunden, das mittels der Lager 115a und 115b drehbar an dem Spindelstock 104 der Werkzeugmaschine gelagert ist. Das Kupplungselement 106a ist drehfest mit einem im inneren des Spindelstocks 104 angeordneten Kegelrad 106b verbunden, welches mit einem weiteren Kegelrad 105 eine zweite Getriebestufe ausbildet. Das Kegelrad 105 ist mit der Spindel 101 drehfest verbunden, insbesondere ist das Kegelrad 105 in Fig. 1 beispielhaft drehfest an dem Spindelkopf 101a der Spindel 101 befestigt. Fig. 1 zeigt einen Kupplungszustand zwischen dem ersten Kupplungsmittel 6, 6a, 7 der Werkzeugwechselvorrichtung 1 und dem Kupplungselement 106a des zweiten Kupplungsmittels.

Das erste Kupplungsmittel 6, 6a, 7 ist dazu eingerichtet, mit dem zweiten Kupplungsmittel 106a, das über die zweite Getriebestufe 105, 106b mit der Spindel 101 der Werkzeugmaschine verbunden ist, eingekuppelt zu werden. Im eingekuppelten Zustand des ersten und zweiten Kupplungsmittels 6, 6a, 7, 106a kann die Werkzeugtrommel 2 durch die Spindel 101 der Werkzeugmaschine über die zweite Getriebestufe 105, 106b, die Kupplungsverbindung zwischen dem zweiten und dem ersten Kupplungsmittel 106a, 7, 6a, 6 und die erste Getriebestufe der Kegelräder 5, 4 zum Ausrichten der Werkzeugklammern 2a, 2b, 2c bzw. der Werkzeuge 10a, 10b, 10c angetrieben werden.

Hierbei ist das erste Kupplungsmittel 6, 6a, 7 an dem Achsträger 3 auf der von der Werkzeugwechselposition an der Spindel 101 relativ zu der Drehachse 3a der Werkzeugtrommel 2 entgegengesetzten Seite angeordnet, so dass der Arbeitsbereich der Spindel 101, d.h. im unteren Bereich der Spindel 101 in Fig. 1, bei der Werkzeugaufnahme 101b frei bleibt und keine Spindelzahngetriebe aufweist, wie sie im Stand der Technik üblicherweise vorgesehen sind.

Insbesondere ist in dem in Fig. 1 dargestellten ersten Ausführungsbeispiel der vorliegenden Erfindung das erste Kupplungsmittel 6, 6a, 7 über eine erste Getriebestufe aus den Zahnrädern 4 und 5 mit der Werkzeugtrommel 2 verbunden, wobei das Kegelrad 4 koaxial mit der Werkzeugtrommel 2 angeordnet ist und das Stirnrad 5 mit dem Kupplungselement 6 drehfest verbunden ist. Durch die Ausbildung dieser ersten Getriebestufe der Zahnräder 4 und 5 als Kegelradgetriebe mit einem Kegelrad kann eine Neigung zwischen der Drehachse 3c der Werkzeugtrommel 2 und der Drehachse des Kupplungselements 6, die senkrecht zu der Drehachse 101c der Spindel 101 angeordnet ist, ausgeglichen werden. Die Drehachsen des Kupplungselements 106a liegt hierbei ebenfalls senkrecht zu der Drehachse 101c der Spindel 101. Die Drehachse 3c der Werkzeugtrommel 2 weist einen Neigungswinkel auf, da die Werkzeugtrommel 2 im eingekuppelten Zustand des ersten und zweiten Kupplungsmittels 6, 6a, 7, 106a zu der Spindel 101 hin geschwenkt ist.

Die erste Getriebestufe bestehend aus den Zahnrädern 4 und 5 und die zweite Getriebestufe bestehend aus den Kegelrädern 105 und 106b bilden zusammen ein Reduktionsgetriebe aus, durch welches eine Drehzahlreduktion bei Antreiben der Werkzeugtrommel 2 durch die Spindel 101 erzielt werden kann.

Die Figs. 3A bis 3C zeigen schematisch die Funktionsweise bzw. Details der Kupplung bestehend aus dem ersten Kupplungsmittel 6, 6a, 7 und dem zweiten Kupplungsmittel 106a gemäß dem ersten Ausführungsbeispiel der vorliegenden Erfindung. Hierbei entspricht Fig. 3A der Position des Spindelstocks 104 gemäß Fig. 1, wobei der Spindelstock 104 sich in der höchsten Position befindet und das erste Kupplungsmittel 6, 6a, 7 mit dem zweiten Kupplungsmittel 106a sich im gekuppelten Zustand befinden.

Wie in Fig. 3B gezeigt ist, ist die Kupplung bestehend aus dem ersten Kupplungsmittel 6, 6a, 7 und dem zweiten Kupplungsmittel 106a in diesem Ausführungsbeispiel der vorliegenden Erfindung als Oldham-Kupplung ausgebildet, wobei beispielhaft das erste Kupplungsmittel 6, 6a, 7 eine äußere Scheibe 6a und die mittlere Scheibe 7 der Oldham-Kupplung aufweist und das zweite Kupplungsmittel die andere äußere Scheibe 106a der Oldham-Kupplung aufweist. Befindet sich die Oldham-Kupplung in der vertikalen Position, wie sie in Fig. 3C gezeigt ist, können die Kupplungsmittel 6, 6a, 7 und 106a durch Abwärtsverfahren des Spindelstocks 104 entkuppelt werden. Durch erneute Aufwärtsbewegung des Spindelstocks 104 können die Kupplungsmittel 6, 6a, 7 und 106a wieder gekuppelt werden.

Bei dem Kuppeln bzw. Entkuppeln des ersten Kupplungsmittels 6, 6a, 7 und des zweiten Kupplungsmittel 106a sind die Kupplungsmittel derart ausgerichtet, dass die Nut der mittleren Scheibe 7 des ersten Kupplungsmittels 6, 6a, 7 und Feder der äußeren Scheibe des zweiten Kupplungsmittels 106a vertikal, d.h. in Verfahrrichtung des Spindelstocks 104 ausgerichtet sind. Somit kann durch halbzahlige bzw. ganzzahlige Umdrehung des ersten und/oder des zweiten Kupplungsmittels ein kuppelbarer bzw. entkuppelbarer Zustand hergestellt werden bzw. aus einem kuppelbaren bzw. entkuppelbaren Zustand in einen weiteren kuppelbaren bzw. entkuppelbaren Zustand gewechselt werden.

Somit weist die Übersetzung der zweiten Getriebestufe der Kegelräder 105, 106b bei besonders bevorzugten Ausführungsbeispielen der vorliegenden Erfindung ein Übersetzungsverhältnis 1:1 oder 1:2 auf, so dass eine Spindelumdrehung der Spindel 101 eine ganzzahlige bzw. halbzahlige Umdrehung des zweiten Kupplungsmittels 106a bewirkt. Bei derartigen Ausführungsbeispielen kann durch ganzzahlige Umdrehung der Spindel 101 bzw. ein Vielfaches einer ganzzahligen Umdrehung der Spindel 101 von einem ent- bzw. kuppelbaren Zustand in einen weiteren ent- bzw. kuppelbaren Zustand gewechselt werden. Die Übersetzung der ersten Getriebestufe der Zahnräder 4 und 5 ist dann bevorzugt so gewählt, dass die Gesamtübersetzung derart bereit gestellt werden kann, dass eine Umdrehung der Spindel 101 bzw. ein ganzzahliges Vielfaches einer Umdrehung der Spindel 101 die Werkzeugtrommel 2 um eine Werkzeugposition weiterdreht, d.h. bei gleichmäßig entlang des Umfangs der Werkzeugtrommel 2 angeordneten Werkzeugaufnahmen 2a, 2b, 2c eine Drehung um einen Winkel entsprechend 360° geteilt durch die Anzahl der gleichmäßig angeordneten Werkzeugaufnahmen 2a, 2b, 2c.

Bei einer Aufnahmekapazität von z.B. 14 Werkzeugen an der Werkzeugtrommel 2 bedeutet dies bei einem Reduktionsverhältnis 1:2 der zweiten Getriebestufe 105, 106a ein Übersetzungsverhältnis von 1:7 oder ein ganzzahliges Vielfaches davon für die erste Getriebestufe der Zahnräder 4 und 5. Bei einem Übersetzungsverhältnis der ersten Getriebestufe 4, 5 von 1:7 und einem Übersetzungsverhältnis der zweiten Getriebestufe 105, 106a von 1:2 ergibt sich somit eine Gesamtübersetzung von 1:14, wobei bei 14 gleichmäßig angeordneten, gleich winkel-beabstandeten Werkzeugaufnahmen 2a, 2b, 2c eine Umdrehung der Spindel 101 eine Drehung der Werkzeugtrommel 2 um genau eine Werkzeugposition bewirkt.

In diesem Ausführungsbeispiel der vorliegenden Erfindung bilden die Kupplungsmittel eine Oldham-Kupplung, bei der das erste Kupplungsmittel 6, 6a, 7 an der Werkzeugwechselvorrichtung 1 eine äußere Scheibe 6a und die mittlere Scheibe 7 der Oldham-Kupplung aufweist, wobei das zweite Kupplungsmittel 106a die andere äußere Scheibe der Oldham-Kupplung aufweist. Die vorliegende Erfindung ist jedoch nicht auf derartige Ausführungen einer Oldham-Kupplung beschränkt. Vielmehr kann bei Ausführungsbeispielen mit Oldham-Kupplung ebenfalls das zweite Kupplungsmittel 106a am Spindelstock 104 der Werkzeugmaschine eine äußere und die mittlere Scheibe der Oldham-Kupplung aufweisen, wobei dann das erste Kupplungsmittel die andere äußere Scheibe der Oldham-Kupplung aufweist. Bei Ausführungsbeispielen mit Oldham-Kupplung ergibt sich generell der Vorteil, dass die Drehachsen der beiden Kupplungsmittel nicht exakt aufeinander positioniert werden müssen, da eine von der koaxialen Positionierung geringfügig abweichende Positionierung die Funktion der Kupplung nicht einschränkt. Jedoch ist die vorliegende Erfindung weiterhin nicht auf Ausführungsbeispiele mit einer Oldham-Kupplung beschränkt. Vielmehr kann eine besonders einfache Kupplung z.B. auch bereits durch eine einfache Feder-Nut-Verbindung bereitgestellt werden, wobei jedoch eine exakte Positionierung der Drehachsen des ersten und zweiten Kupplungsmittels erforderlich wird. Neben formschlüssigen Kupplungen, wie sie vorstehend beschrieben sind, kann weiterhin auch eine kraftschlüssige Kupplung bereit gestellt werden (z.B. durch Kraftschluss durch Reibungskraft oder auch magnetische bzw. elektromagnetische Kraft). Bei reibkraftschlüssigen Kupplungen kann das Einkuppeln ggf. zusätzlich über die Steuerkurve 116 gesteuert werden (z.B. über eine kleine horizontale Hin-und Herbewegung mittels der Steuerkurve bei Annähern der Kupplungsmittel).

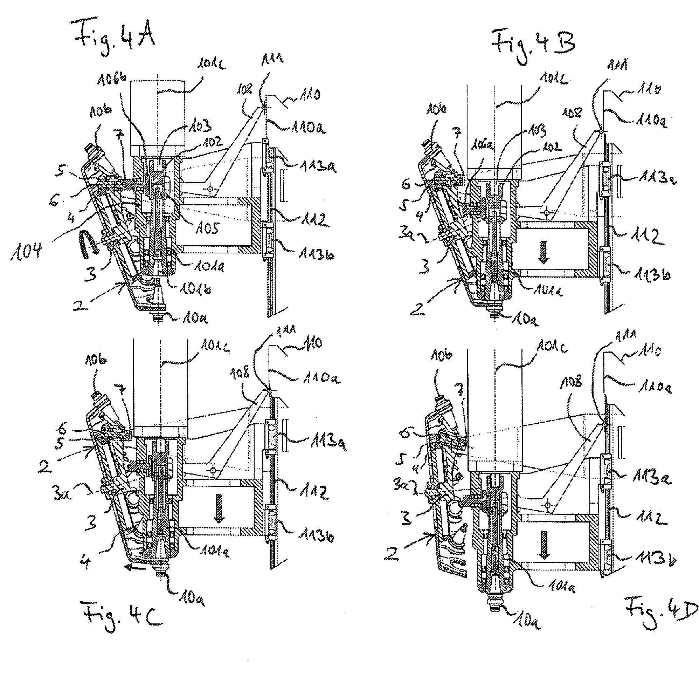

Die Figs. 4A bis 4D zeigen beispielhaft einen Einwechselvorgang eines Werkzeugs 10a in der Werkzeugaufnahme 101b der Spindel 101 der Werkzeugmaschine mittels der Werkzeugwechselvorrichtung 1 gemäß dem ersten Ausführungsbeispiel der vorliegenden Erfindung. In Fig. 4A befindet sich der Spindelstock 104 der Werkzeugmaschine in der höchsten Position und die Kupplungsmittel 6, 6a, 7, 106a der Kupplung befinden sich in dem gekuppelten Zustand (siehe auch Fig. 1). Durch Drehung der Spindel 101 kann eine Drehung der Werkzeugtrommel 2 um die Drehachse 3a der drehbaren Lagerung 9a, 9b am Achsträger 3 gedreht werden (siehe Pfeil in Fig. 4A) um das vorbestimmte Werkzeug 10a mit der Drehachse 101c der Spindel 101 auszurichten.

Nach erfolgter Ausrichtung erfolgt die Werkzeugaufnahme des Werkzeugs 10a in der Werkzeugaufnahme 101b der Spindel 7 durch Abwärtsverfahren des Spindelstocks 104, wobei zuerst die Kupplungsverbindung der Kupplungsmittel 6, 6a, 7, 106a aufgehoben wird (siehe Fig. 4B) und das ausgerichtete Werkzeug 10a in der Werkzeugaufnahme 101b der Spindel 101 aufgenommen wird. Durch weiteres Abwärtsverfahren des Spindelstocks 104 bewirkt die Zusammenwirkung der Steuerkurve 116 mit der Rolle 12 am Achsträger 3 eine Schwenkbewegung der Werkzeugtrommel 2 von der Spindel 101 weg (siehe Figs. 4C und 4D) worauf hin die Bearbeitung eines Werkstücks mittels des in der Spindel 101 aufgenommen Werkzeugs 10a in einer tieferen Position des Spindelstocks 104 ausgeführt werden kann.

Das Spannen der Werkzeuge 10a, 10b, 10c in der Spindel 101 erfolgt durch ein Federpaket. Die für das Lösen der Werkzeugspannvorrichtung erforderliche Lösekraft und Bewegung erfolgt indirekt über die Vertikalbewegung des Spindelstocks 104. Ein am Spindelstock 104 mittels eines Lagers 109 schwenkbar gelagerter Umlenkhebel 108, dessen eine Seite mit einer federvorgespannten Werkzeughalte- bzw. Lösestange 107 verbunden ist, wird an der anderen Seite des Umlenkhebels 108 mittels einer in dem Umlenkhebel 108 gelagerten Rolle 111 und einer am Maschinenständer 110 befindlichen Steuerkurve 110a durch die Vertikalbewegung des Spindelstocks 104 betätigt (siehe Fig. 1 und Figs. 4B bis 4D).

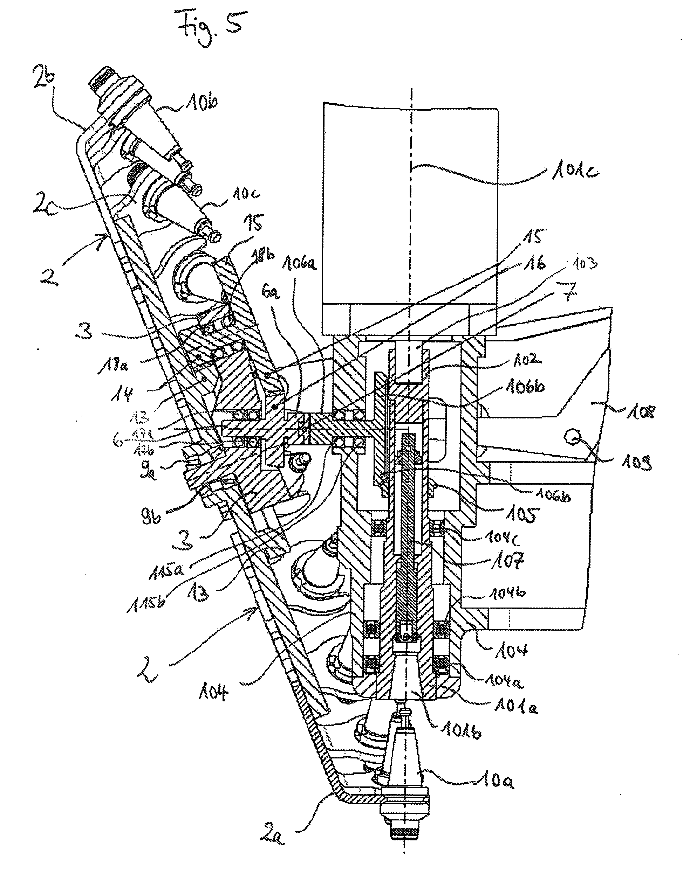

Fig. 5 zeigt beispielhaft eine schematische Teilschnittansicht eines zweiten Ausführungsbeispiels einer Werkzeugwechselvorrichtung nach der vorliegenden Erfindung. Die Werkzeugwechselvorrichtung nach dem zweiten Ausführungsbeispiel der vorliegenden Erfindung unterscheidet sich von dem ersten Ausführungsbeispiel durch die Anzahl der an dem Achsträger 3 gelagerten Getriebestufen. Hierbei ist gemäß der Ausführungsform in Fig. 5 eine erste Getriebestufe 13, 14 als Stirnradgetriebestufe ausgebildet, wobei eine weitere Getriebestufe 15, 16 als Kegelradgetriebestufe ausgebildet ist.

Die Stirnradgetriebestufe umfasst zwei Stirnräder 13 und 14, wobei das eine Stirnrad 13 (erstes Zahnrad) drehfest mit der Werkzeugtrommel 2 verbunden ist und das andere Stirnrad 14 (drittes Zahnrad) der Stirnradgetriebestufe drehfest mit einem Kegelrad 15 (viertes Zahnrad) der Kegelradgetriebestufe verbunden ist und mit diesem mittels der Lager 18a und 18b drehbar an dem Achsständer 3 gelagert ist. Das andere Kegelrad 16 (zweites Zahnrad) ist drehfest mit dem Kupplungselement 6 des ersten Kupplungsmittels 6, 6a, 7 befestigt und mittels der Lager 17a und 17b drehbar an dem Achsständer 3 gelagert.

Die Kegelradgetriebestufe mit den Kegelrädern 15 und 16 gleicht hierbei einen Neigungswinkel zwischen der Drehachse 3a der Werkzeugtrommel 2 und dem ersten Kupplungsmittel 6, 6a, 7 aus. Dies ermöglicht es vorteilhaft, dass die Drehachse des Verbindungselements, das das Stirnrad 14 (drittes Zahnrad) der Stirnradgetriebestufe mit dem Kegelrad 15 (viertes Zahnrad) der Kegelradgetriebestufe drehfest verbindet, parallel zu der Drehachse der Werkzeugtrommel 2 verläuft, wodurch eine besonders kompakte Konstruktion ermöglicht wird, da die Zahnräder 14 und 15 parallel mit der Werkzeugtrommel 2 angeordnet werden können (siehe Fig. 5). Die vorliegende Erfindung ist jedoch nicht auf eine derartige Ausbildung eingeschränkt und vielmehr können auch Ausführungsformen bereitgestellt werden, bei denen die Getriebestufe der Zahnräder 13 und 14 als Stirnrad- oder Kegelradgetriebestufe ausgebildet ist und die Getriebestufe der Zahnräder 15 und 16 als Stirnrad- oder Kegelradgetriebestufe ausgebildet ist. Bei Ausführungsbeispielen, bei denen beide Getriebestufen als Kegelradgetriebestufe ausgebildet sind, gleichen die Kegelradgetriebestufen vorzugsweise gemeinsam den Neigungswinkel zwischen der Drehachse 3a der Werkzeugtrommel 2 und der Drehachse des ersten Kupplungsmittels 6, 6a, 7 aus.

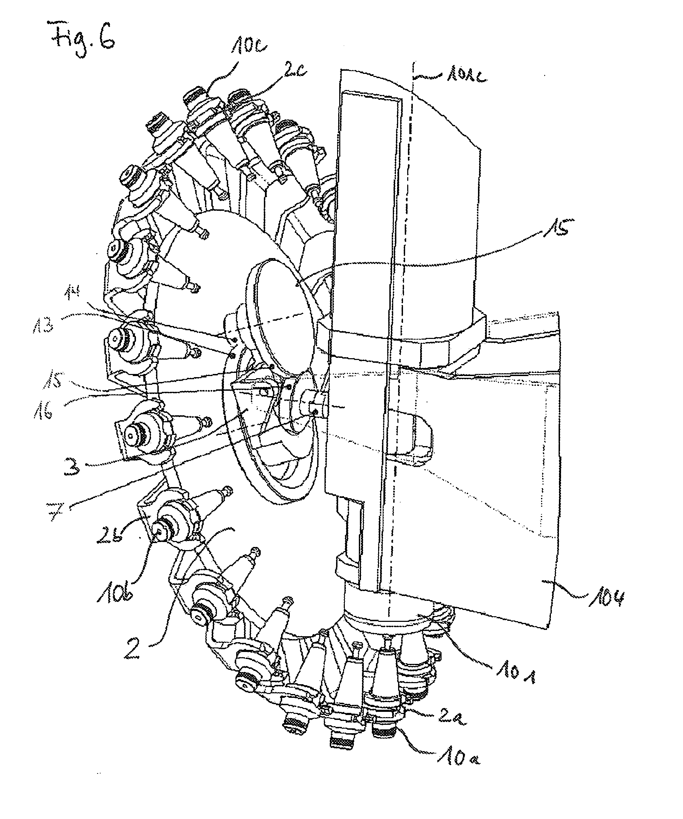

Fig. 6 zeigt beispielhaft eine schematische Perspektivansicht einer Werkzeugwechselvorrichtung nach dem zweiten Ausführungsbeispiel der vorliegenden Erfindung. Eine derartige Ausgestaltung mit zwei Getriebestufen, die an dem Achsträger 3 drehbar gelagert sind, kann aufgrund der zwei zusammenwirkenden Übersetzungen auf besonders kompakte Art und Weise eine Reduktion bei einer hohen Anzahl von Werkzeugaufnahmen 2a, 2b, 2c an der Werkzeugtrommel 2 bereitgestellt werden. Hierbei ergibt sich die Gesamtübersetzung durch das Zusammenwirken der Übersetzungen der Getriebestufe 105, 106b (zweite Getriebestufe) an der Spindel 101 und der beiden in der Werkzeugwechselvorrichtung integrierten Getriebestufen (erste und dritte Getriebestufe). Somit eignet sich die Werkzeugwechselvorrichtung gemäß dem zweiten Ausführungsbeispiel der vorliegenden Erfindung insbesondere für Werkzeugtrommeln mit einer großen Anzahl von Werkzeugaufnahmen mit geringer Winkel-Beabstandung, d.h. mit geringem Winkel zwischen benachbart angeordneten Werkzeugaufnahmen.

Bei einer Aufnahmekapazität von z.B. 21 Werkzeugen an der Werkzeugtrommel 2 bedeutet dies bei einem Reduktionsverhältnis 1:2 der zweiten Getriebestufe 105, 106a ein Übersetzungsverhältnis von 1:10,5 oder ein ganzzahliges Vielfaches davon für die zwei Getriebestufen der Zahnräder 13, 14, 15 und 16. Bei einem Übersetzungsverhältnis der zwei Getriebestufen 13, 14, 15 und 16 von 1:10,5 und einem Übersetzungsverhältnis der zweiten Getriebestufe 105, 106a von 1:2 ergibt sich somit eine Gesamtübersetzung von 1:21, wobei bei 21 gleichmäßig angeordneten, gleich winkel-beabstandeten Werkzeugaufnahmen 2a, 2b, 2c eine Umdrehung der Spindel 101 eine Drehung der Werkzeugtrommel 2 um genau eine Werkzeugposition bewirkt.

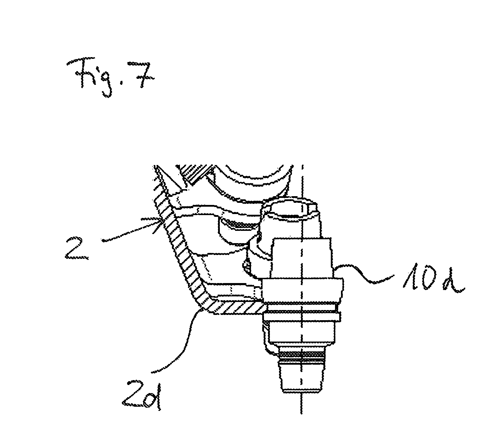

Fig. 7 zeigt eine Werkzeugklammer 2c einer Werkzeugwechselvorrichtung nach einem weiteren Ausführungsbeispiel der vorliegenden Erfindung mit einem in der Werkzeugklammer 2c aufgenommenen Werkzeug 10c. In den vorstehend beschriebenen Figuren 1 bis sind Werkzeuge 10a, 10b, 10c in Werkzeugklammern 2a, 2b, 2c gehalten, die entlang des Umfangs der Werkzeugtrommel 2 angeordnet sind. Die Werkzeuge 10a, 10b, 10c sind derart ausgeführt, dass sie in eine Steilkegel-Werkzeugaufnahme 101b der Spindel 101 aufgenommen werden können. Die vorliegende Erfindung ist jedoch nicht auf Ausführungsbeispiele mit Steilkegel-Werkzeugaufnahmen 101b der Spindel 101 beschränkt. Auch andere Werkzeugaufnahme-Schnittstellen sind möglich. So zeigt Fig. 7 z.B. ein Werkzeug 10c, das zur Aufnahme an der Spindel 101 mittels einer HSK-Schnittstelle (HSK für Hohlschaftkegel) geeignet ist. In einem derartigen Ausführungsbeispiel ist an der Spindel 101 dann eine HSK-Werkzeugaufnahme vorgesehen. Die weiteren Funktionsweisen der Werkzeugwechselvorrichtung kann wie in den vorstehend beschriebenen Ausführungsbeispielen bereitgestellt werden.

Zusammenfassend stellt die vorliegende Erfindung eine Werkzeugwechselvorrichtung bereit, die einen kompakten Aufbau aufweist und mit verminderter Reibung durch die Spindel der Werkzeugmaschine angetrieben werden kann. Die vorliegende Erfindung eine Werkzeugwechselvorrichtung stellt eine Werkzeugwechselvorrichtung mit einer drehbaren Werkzeugtrommel bereit, die über die Spindel angetrieben wird, ohne ein kompliziertes und reibungsanfälliges Kurvenreduktionsgetriebe zu erfordern, wobei dennoch eine effektive Drehzahlreduktion von Werkzeugspindel auf Werkzeugtrommel erzielt werden kann. Die Werkzeugwechselvorrichtung gemäß der vorliegenden Erfindung kann mit einem effizienten, reibungsarmen und einfach und kompakt aufgebautem Reduktionsgetriebe bereitgestellt werden. Außerdem ist es gemäß der vorliegenden Erfindung nicht erforderlich, ein freiliegendes Spindelzahnrad im Arbeitsbereich der Spindel zum Antreiben der Werkzeugtrommel der Werkzeugwechselvorrichtung vorzusehen.

### BEZUGSZEICHENLISTE

- 1: Werkzeugwechselvorrichtung
- 2: Werkzeugtrommel
- 2a, 2b, 2c: Werkzeugklammer (Werkzeugaufnahmemittel)
- 3: Achsträger
- 3a: Drehachse des Achsträgers
- 4: Kegelrad (erstes Zahnrad)
- 5: Stirnrad (zweites Zahnrad)
- 6: Kupplungselement
- 6a: äußere Scheibe einer Oldham-Kupplung
- 7: mittlere Scheibe einer Oldham-Kupplung
- 8a, 8b: Lager
- 9a, 9b: Lager
- 10a, 10b, 10c: Werkzeug
- 11: Zugfeder
- 12: Rolle
- 13: Stirnrad (erstes Zahnrad)

- 14: Stirnrad (drittes Zahnrad)
- 15: Kegelrad (viertes Zahnrad)
- 16: Kegelrad (zweites Zahnrad)
- 17a, 17b: Lager
- 18a, 18b: Lager
- 101: Spindel
- 101a: Spindelkopf
- 101b: Werkzeugaufnahme der Spindel
- 101c: Drehachse der Spindel
- 102: Verbindungselement
- 103: Endabschnitt der Antriebswelle
- 104: Spindelstock
- 104a, 104b, 104c: Lager
- 105: Kegelrad
- 106a: Kupplungselement
- 106b: Kegelrad
- 107: Lösestange
- 108: Umlenkhebel
- 109: Lager
- 110: Maschinenständer
- 110: Steuerkurve (am Maschinenständer)
- 111: Rolle
- 112: Führungsschiene
- 113a, 113b: Schlitten
- 114: Halterung
- 114a: Gelenk
- 115a, 115b: Lager
- 116: Steuerkurve (am Spindelstock)

## Patentansprüche

1. Werkzeugmaschine mit
- einem Spindelstock (104);
- einer in dem Spindelstock (104) angeordneten Spindel (101);
- einem zweiten Kupplungsmittel (106a), das drehbar an dem Spindelstock (104) der Werkzeugmaschine gelagert ist und über eine zweite Getriebestufe (105, 106b) von der Spindel (101) der Werkzeugmaschine angetrieben wird; und
- einer Werkzeugwechselvorrichtung zum Wechseln eines Werkzeugs (10a) an der Spindel (101);
wobei die Werkzeugwechselvorrichtung
eine Werkzeugtrommel (2) mit einer Mehrzahl von Werkzeugaufnahmemitteln (2a,
2b, 2c) zum Aufnehmen von Werkzeugen (10a, 10b, 10c),
einen Achsträger (3), an dem die Werkzeugtrommel (2) zum Ausrichten der Werkzeugaufnahmemittel (2a, 2b, 2c) mit der Spindel (101) drehbar gelagert ist,
ein erstes Kupplungsmittel (6, 6a, 7), das drehbar an dem Achsträger (3) gelagert ist, und
zumindest eine erste Getriebestufe (4, 5; 13, 14, 15, 16), über die das erste Kupplungsmittel (6, 6a, 7) mit der Werkzeugtrommel (2) verbunden ist,
umfasst;
wobei das erste Kupplungsmittel (6, 6a, 7) dazu eingerichtet ist, mit dem zweiten Kupplungsmittel (106a) ein- bzw. ausgekuppelt zu werden;
wobei die Werkzeugmaschine dazu eingerichtet ist, die Werkzeugtrommel (2) zum Ausrichten der Werkzeugaufnahmemittel (2a, 2b, 2c) bei eingekuppeltem Zustand des ersten und zweiten Kupplungsmittels (6, 6a, 7, 106a) durch die Spindel (101) über die zweite Getriebestufe (105, 106b), das zweite und erste Kupplungsmittel (106a, 7, 6a, 6) und die zumindest eine erste Getriebestufe (5, 4; 16, 15, 14, 13) anzutreiben; und
wobei der Achsträger (3) dazu eingerichtet ist, mittels eines Gelenks (114a) schwenkbar gelagert an einer Halterung (114) der Werkzeugmaschine befestigt zu werden.

2. Werkzeugmaschine nach Anspruch 1, **dadurch gekennzeichnet, dass** das erste Kupplungsmittel (6, 6a, 7) an dem Achsträger (3) auf einer von einer Werkzeugwechselposition an der Spindel (101) relativ zu der Drehachse (3a) der Werkzeugtrommel (3) entgegengesetzten Seite angeordnet ist.

3. Werkzeugmaschine nach Anspruch 1 oder 2, **dadurch gekennzeichnet, dass** das erste Kupplungsmittel (6, 6a, 7) über eine erste Getriebestufe (4, 5) mit der Werkzeugtrommel (2) verbunden ist, wobei die erste Getriebestufe (4, 5) ein koaxial mit der Werkzeugtrommel (2) angeordnetes erstes Zahnrad (4), das drehfest mit der Werkzeugtrommel (2) verbunden ist, und ein drehfest mit dem ersten Kupplungsmittel (6, 6a, 7) verbundenes zweites Zahnrad (5) umfasst.

4. Werkzeugmaschine nach Anspruch 1 oder 2, **dadurch gekennzeichnet, dass** das erste Kupplungsmittel (6, 6a, 7) über eine erste Getriebestufe (13, 14) und eine dritte Getriebestufe (15, 16) mit der Werkzeugtrommel (2) verbunden ist, wobei
die erste Getriebestufe (13, 14) ein koaxial mit der Werkzeugtrommel (2) angeordnetes erstes Zahnrad (13), das drehfest mit der Werkzeugtrommel (2) verbunden ist, und ein drittes Zahnrad (14) umfasst,
die dritte Getriebestufe (15, 16) ein drehfest mit dem ersten Kupplungsmittel (6, 6a, 7) verbundenes zweites Zahnrad (16) und ein viertes Zahnrad (15) umfasst, und
das dritte Zahnrad (14) der ersten Getriebestufe (13, 14) und das vierte Zahnrad (15) der dritten Getriebestufe (15, 16) drehfest miteinander verbunden sind,
wobei das dritte Zahnrad (14) der ersten Getriebestufe (13, 14) und das vierte Zahnrad (15) der dritten Getriebestufe (15, 16) über ein Verbindungsmittel verbunden sind, das drehbar an dem Achsträger (3) gelagert ist.

5. Werkzeugmaschine nach einem der Ansprüche 1 bis 4, **dadurch gekennzeichnet, dass** das erste und das zweite Kupplungsmittel (6, 6a, 7, 106a) eine Oldham-Kupplung (6a, 7, 106a) ausbilden.

6. Werkzeugmaschine nach einem der Ansprüche 1 bis 5, **dadurch gekennzeichnet, dass** das erste Kupplungsmittel (6, 6a, 7) dazu eingerichtet ist, mit dem zweiten Kupplungsmittel (106a) durch Auf- und Abwärtsverfahren des Spindelstocks (104) relativ zu dem Achsträger (3) eln- bzw. ausgekuppelt zu werden.

7. Werkzeugmaschine nach einem der Ansprüche 1 bis 6, **dadurch gekennzeichnet, dass** die Mehrzahl von Werkzeugaufnahmemittein (2a, 2b, 2c) entlang
eines Umfangs der Werkzeugtrommel (2) gleichmäßig angeordnet sind und die Übersetzungen der zumindest einen ersten Getriebestufe (4, 5; 13, 14, 15, 16) und der zweiten Getriebestufe (105, 106b) derart vorgesehen sind, dass die Gesamtübersetzung derart eingestellt ist, dass die Werkzeugtrommel (2) bei einer Spindelumdrehung oder bei einem ganzzahligen Vielfachen einer Spindelumdrehung um eine Werkzeugaufnahmeposition weitergedreht wird, insbesondere um einen Winkel entsprechend 360° geteilt durch die Anzahl der Werkzeugaufnahmemittel (2a, 2b, 2c).

8. Werkzeugmaschine nach einem der Ansprüche 1 bis 7, **dadurch gekennzeichnet, dass** die Drehachse des ersten Kupplungsmittels (6, 6a, 7) im eingekuppelten Zustand mit dem zweiten Kupplungsmittel (106a) im Wesentlichen senkrecht zu der Drehachse (101c) der Spindel (101) angeordnet ist.

9. Werkzeugmaschine nach Anspruch 8, **dadurch gekennzeichnet, dass** die Drehachse (3a) der Werkzeugtrommel (2) im eingekuppelten Zustand des ersten und zweiten Kupplungsmittels (6, 6a, 7, 106a) zu der Drehachse des ersten Kupplungsmittels (6, 6a, 7) geneigt ist und der Neigungswinkel zwischen der Drehachse (3a) der Werkzeugtrommel (2) und der Drehachse des ersten Kupplungsmittels (6, 6a, 7) durch zumindest ein Kegelrad (4; 15, 16) der zumindest einen ersten Getriebestufe ausgeglichen wird.

10. Werkzeugmaschine nach einem der Ansprüche 1 bis 9, **dadurch gekennzeichnet, dass** der Spindelstock (104) relativ zu der Werkzeugwechselvorrichtung (1) auf- und abwärts verfahrbar ist, und die Werkzeugwechselvorrichtung (1) mittels zumindest einer Zugfeder (11) an eine Steuerkurve (116) des Spindelstocks (104) gedrückt wird, wobei bei Verfahren des Spindelstocks (104) ein am Achsträger (3) angeordnetes Führungsmittel (12) entlang der Steuerkurve (116) geführt wird, derart dass ein Aufwärtsverfahren des Spindelstocks (104) eine Schwenkbewegung des Achsträgers (3) zu der Spindel (101) hin bewirkt und ein Abwärtsverfahren des Spindelstocks (104) eine Schwenkbewegung des Achsträgers (3) von der Spindel (101) weg bewirkt.

11. Werkzeugmaschine nach einem der Ansprüche 1 bis 10, **dadurch gekennzeichnet, dass** der Spindelstock (104) relativ zu der Werkzeugwechselvorrichtung (1) auf- und abwärts verfahrbar ist und das erste Kupplungsmittel (6, 6a, 7) dazu eingerichtet ist, mit dem zweiten Kupplungsmittel (106a) durch auf- und abwärtsverfahren des Spindelstocks (104) relativ zu dem Achsträger (3) ein- bzw. ausgekuppelt zu werden.

12. Werkzeugmaschine nach Anspruch 11, **dadurch gekennzeichnet, dass** sich das erste und das zweite Kupplungsmittel (6, 6a, 7, 106a) in der höchsten Position des Spindelstocks (104) in dem eingekuppelten Zustand befinden, wobei ein Abwärtsverfahren des Spindelstocks (104) aus der höchsten Position das erste und das zweite Kupplungsmittel (6, 6a, 7, 106a) entkuppelt.

## Claims

1. A machine tool, comprising:
- spindle stock (104);
- a spindle (101) disposed in the spindle stock (104);
- a second coupling portion (106a) rotatably supported on the spindle stock (104) of the machine tool and driven by the spindle (101) of the machine tool via a second gear stage (105, 106b); and
- a tool changer to change a tool (10a) on the spindle (101);
wherein the tool changer comprises
a tool drum (2) having a plurality of tool holders (2a, 2b, 2c) to hold tools (10a, 10b, 10c),
an axle carrier (3) on which the tool drum (2) is rotatably supported to align the tool holders (2a, 2b, 2c) with the spindle (101),
a first coupling portion (6, 6a, 7) rotatably supported on the axle carrier (3), and at least one first gear stage (4, 5; 13, 14, 15, 16) via which the first coupling portion (6, 6a, 7) is connected to the tool drum (2);
wherein the first coupling portion (6, 6a, 7) is adapted to be coupled or uncoupled with the second coupling portion (106a);
wherein the machine tool is adapted to drive the tool drum (2) by the spindle (101) to align the tool holders (2a, 2b, 2c) in a coupled state of the first and second coupling portions (6, 6a, 7, 106a) via the second gear stage (105, 106b), the second and first coupling portions (106a, 7, 6a, 6) and the at least one first gear stage (5, 4; 16, 15, 14, 13); and
wherein the axle carrier (3) is adapted to be attached to a fixture (114) of the machine tool by an articulation (114a) so as to be pivotably supported.

2. The machine tool according to claim 1, **characterized in that** the first coupling portion (6, 6a, 7) is disposed on the axle carrier (3) on a side opposite the tool changing position on the spindle (101) relative to the rotational axis (3a) of the tool drum (3).

3. The machine tool according to claim 1 or 2, **characterized in that** the first coupling portion (6, 6a, 7) is connected to the tool drum (2) via first gear stage (4, 5), the first gear stage (4, 5) comprising a first gear (4) disposed coaxially with the tool drum (2) and connected to the tool drum (2) in a rotationally fixed manner, and a second gear (5) connected to the first coupling portion (6, 6a, 7) in a rotationally fixed manner.

4. The machine tool according to claim 1 or 2, **characterized in that** the first coupling portion (6, 6a, 7) is connected to the tool drum (2) via a first gear stage (13, 14) and a third gear stage (15, 16), wherein
the first gear stage (13, 14) comprises a first gear (13) disposed coaxially with the tool drum (2), which is connected to the tool drum (2) in a rotationally fixed manner, and a third gear (14),
the third gear stage (15, 16) comprises a second gear (16) connected to the first coupling portion (6, 6a, 7) in a rotationally fixed manner, and a fourth gear (15), and
the third gear (14) of the first gear stage (13, 14) and the fourth gear (15) of the third gear stage (15, 16) are interconnected so as to be rotationally fixed,
wherein the third gear (14) of the first gear stage (13, 14) and the fourth gear (15) of the third gear stage (15, 16) are connected via a connecting means rotatably supported on the axle carrier (3).

5. The machine tool according to any one of claims 1 to 4, **characterized in that** the first and the second coupling portions (6, 6a, 7, 106a) form an Oldham coupling (6a, 7, 106a).

6. The machine tool according to any one of claims 1 to 5, **characterized in that** the first coupling portion (6, 6a, 7) is adapted to be coupled or uncoupled with the second coupling portion (106a) by moving the spindle stock (104) up and down relative to the axle carrier (3).

7. The machine tool according to any one of claims 1 to 6, **characterized in that** the plurality of tool holders (2a, 2b, 2c) is uniformly disposed along a circumference of the tool drum (2) and the transmissions of the at least one first gear stage (4, 5; 13, 14, 15, 16) and the second gear stage (105, 106b) are provided such that the total transmission is adjusted such that in case of a spindle rotation or an integral multiple of a spindle rotation, the tool drum (2) is moved on by one tool holding position, particularly by an angle corresponding to 360° divided by the number of tool holders (2a, 2b, 2c).

8. The machine tool according to any one of claims 1 to 7, **characterized in that** the rotational axis of the first coupling portion (6, 6a, 7) in a coupled state with the second coupling portion (106a) is disposed substantially perpendicular to the rotational axis (101c) of the spindle (101).

9. The machine tool according to claim 8, **characterized in that** the rotational axis (3a) of the tool drum (2) in a coupled state of the first and second coupling portions (6, 6a, 7, 106a) is inclined towards the rotational axis of the first coupling portion (6, 6a, 7) and an angle of inclination between the rotational axis (3a) of the tool drum (2) and the rotational axis of the first coupling portion (6, 6a, 7) is compensated by at least one bevel gear (4; 15, 16) of the at least one first gear stage.

10. The machine tool according to any one of claims 1 to 9, **characterized in that** the spindle stock (104) can be moved up and down relative to the tool changer (1) and the tool changer (1) is pressed against a radial cam (116) of the spindle stock (104) by at least one tension spring (11), wherein when the spindle stock (104) is moved a guide (12) disposed on an axle carrier (3) is guided along the radial cam (116) such that an upward movement of the spindle stock (104) causes a pivoting movement of the axle carrier (3) towards the spindle (101) and a downward movement of the spindle stock (104) causes a pivoting movement of the axle carrier (3) away from the spindle (101).

11. The machine tool according to any one of claims 1 to 10, **characterized in that** the spindle stock (104) can be moved up and down relative to the tool changer (1) and the first coupling portion (6, 6a, 7) is adapted to be coupled or uncoupled with the second coupling portion (106a) by moving the spindle stock (104) up and down relative to the axle carrier (3).

12. The machine tool according to claim 11, **characterized in that** the first and second coupling portions (6, 6a, 7, 106a) are in the coupled state at the top-most position of the spindle stock (104), wherein a downward movement of the spindle stock (104) from the top-most position uncouples the first and second coupling portions (6, 6a, 7, 106a).

## Revendications

1. Machine-outil comprenant
- une poupée porte-broche (104) ;
- une broche (101) agencée dans la poupée porte-broche (104) ;
- un second moyen d'accouplement (106a) qui est monté mobile en rotation sur la poupée porte-broche (104) de la machine-outil et qui est entraîné par la broche (101) de la machine-outil par l'intermédiaire d'un second étage de transmission (105, 106b) : et
- un dispositif de changement d'outil pour changer d'un outil (10a) sur la broche (101) ;
le dispositif de changement d'outil comprenant un tambour à outils (2) pourvu d'une pluralité de moyens de logement d'outil (2a, 2b, 2c) destinés à recevoir des outils (10a, 10b, 10c),
un support d'axe (3) sur lequel est monté en rotation le tambour à outils (2) en vue d'aligner les moyens de logement d'outil (2a, 2b, 2c) avec la broche (101),
un premier moyen d'accouplement (6, 6a, 7) qui est monté mobile en rotation sur le support d'axe (3), et
au moins un premier étage de transmission (4, 5 ; 13, 14, 15, 16) par l'intermédiaire duquel le premier moyen d'accouplement (6, 6a, 7) est relié au tambour à outils (2),
le premier moyen d'accouplement (6, 6a, 7) étant aménagé pour être accouplé au second moyen d'accouplement (106a) ou d'être découplé de celui-ci ;
la machine-outil étant aménagée pour entraîner le tambour à outils (2) en vue d'aligner les moyens de logement d'outil (2a, 2b, 2c) dans l'état accouplé des premier et second moyens d'accouplement (6, 6a, 7, 106a) par la broche (101) par l'intermédiaire du second étage de transmission (105, 106b), du second et du premier moyen d'accouplement (106a, 7, 6a, 6) et dudit au moins un premier étage de transmission (5, 4 ; 16, 15, 14, 13) ; et
le support d'axe (3) étant aménagé pour être fixé sur une monture (114) de la machine-outil en étant monté mobile en pivotement au moyen d'une articulation (114a).

2. Machine-outil selon la revendication 1, **caractérisée en ce que** le premier moyen d'accouplement (6, 6a, 7) est agencé sur le support d'axe (3) sur un côté opposé à une position de changement d'outil sur la broche (101) par rapport à l'axe de rotation (3a) du tambour à outils (3).

3. Machine-outil selon la revendication 1 ou 2, **caractérisée en ce que** le premier moyen d'accouplement (6, 6a, 7) est relié au tambour à outils (2) par l'intermédiaire d'un premier étage de transmission (4, 5), le premier étage de transmission (4, 5) comprenant une première roue dentée agencée coaxialement avec le tambour à outils (2) et reliée solidairement en rotation au tambour à outils (2), et une seconde roue dentée (5) reliée solidairement en rotation au premier moyen d'accouplement (6, 6a, 7).

4. Machine-outil selon la revendication 1 ou 2, **caractérisée en ce que** le premier moyen d'accouplement (6, 6a, 7) est relié au tambour à outils (2) par l'intermédiaire d'un premier étage de transmission (13, 14) et d'un troisième étage de transmission (15, 16),
dans laquelle
le premier étage de transmission (13, 14) comprend une première roue dentée (13) agencée coaxialement avec le tambour à outils (2) et reliée solidairement en rotation au tambour à outils (2), ainsi qu'une troisième roue dentée (14),
le troisième étage de transmission (15, 16) comprend une seconde roue dentée (16) reliée solidairement en rotation au premier moyen d'accouplement (6, 6a, 7) ainsi qu'une quatrième roue dentée (15), et
la troisième roue dentée (14) du premier étage de transmission (13, 14) et la quatrième roue dentée (15) du troisième étage de transmission (15, 16) sont reliées solidairement en rotation l'une à l'autre,
la troisième roue dentée (14) du premier étage de transmission (13, 14) et la quatrième roue dentée (15) du troisième étage de transmission (15, 16) étant reliées par un moyen de liaison qui est monté mobile en rotation sur le support d'axe (3).

5. Machine-outil selon l'une des revendications 1 à 4, **caractérisée en ce que** les premier et second moyens d'accouplement (6, 6a, 7, 106a) forment un joint d'Oldham (6a, 7, 106a).

6. Machine-outil selon l'une des revendications 1 à 5, **caractérisée en ce que** le premier moyen d'accouplement (6, 6a, 7) est aménagé pour être accouplé au second moyen d'accouplement (106a) ou d'être découplé de celui-ci par déplacement,ascendant ou descendant de la poupée porte-broche (104) par rapport au support d'axe (3).

7. Machine-outil selon l'une des revendications 1 à 6, **caractérisée en ce que** la pluralité de moyens de logement d'outil (2a, 2b, 2c) sont agencés régulièrement le long d'une circonférence du tambour à outils (2) et les multiplications dudit au moins un premier étage de transmission (4, 5 ; 13, 14, 15, 16) et du second étage de transmission (105, 106b) sont prévues de telle sorte que la multiplication totale est réglée telle que lors d'un tour de la broche ou lors d'un multiple entier d'un tour de la broche, le tambour à outils (2) continue d'être tourné d'une position de logement d'outil, en particulier d'un angle qui correspond à 360° divisé par le nombre de moyens de logement d'outil (2a, 2b, 2c).

8. Machine-outil selon l'une des revendications 1 à 7, **caractérisée en ce que** dans l'état accouplé avec le second moyen d'accouplement (106a) l'axe de rotation du premier moyen d'accouplement (6, 6a, 7) est agencé sensiblement perpendiculairement à l'axe de rotation (101c) de la broche (101).

9. Machine-outil selon la revendication 8, **caractérisée en ce que** dans l'état accouplé des premier et second moyens d'accouplement (6, 6a, 7, 106a) l'axe de rotation (3a) du tambour à outils (2) est incliné par rapport à l'axe de rotation du premier moyen d'accouplement (6, 6a, 7), et l'angle d'inclinaison entre l'axe de rotation (3a) du tambour à outil (2) et l'axe de rotation du premier moyen d'accouplement (6, 6a, 7) est compensé par au moins une roue conique (4 ; 15, 16) dudit au moins un premier étage de transmission.

10. Machine-outil selon l'une des revendications 1 à 9, **caractérisée en ce que** la poupée porte-broche (104) est mobile en montant et descendant par rapport au dispositif de changement d'outil (1), et le dispositif de changement d'outil (1) est pressé contre une came de commande (116) de la poupée porte-broche (104) au moyen d'au moins un ressort de traction (11), et lors du déplacement de la poupée porte-broche (104) un moyen de guidage (12) agencé sur le support d'axe (3) est guidé le long de la came de commande (116), de telle sorte qu'une montée de la poupée porte-broche (104) provoque un pivotement du support d'axe (3) vers la broche (101) et qu'une descente de la poupée porte-broche (104) provoque un pivotement du support d'axe (3) en éloignement de la broche (101).

11. Machine-outil selon l'une des revendications 1 à 10, **caractérisée en ce que** la poupée porte-broche (104) est mobile en montant et descendant par rapport au dispositif de changement d'outil (1), et le premier moyen d'accouplement (6, 6a, 7) est aménagé pour être accouplé au second moyen d'accouplement (106a) ou d'être découplé de celui-ci par une montée ou une descente de la poupée porte-broche (104) par rapport au support d'axe (3).

12. Machine-outil selon la revendication 11, **caractérisée en ce que** dans la position la plus haute de la poupée porte-broche (104), les premier et second moyens d'accouplement (6, 6a, 7, 106a) se trouvent dans l'état accouplé, et une descente de la poupée porte-broche (104) depuis la position la plus haute fait découpler les premier et second moyens d'accouplement (6, 6a, 7, 106a).
